Europäisches Patentamt

European Patent Office

Office européen des brevets

(11) Veröffentlichungsnummer: **0 391 222 A1**

(12) **EUROPÄISCHE PATENTANMELDUNG**

(21) Anmeldenummer: **90105864.4**

(22) Anmeldetag: **28.03.90**

(51) Int. Cl.⁵: **B60G 21/055, B29C 53/58, B29L 23/00**

(30) Priorität: **01.04.89 DE 3910641**

(43) Veröffentlichungstag der Anmeldung:
**10.10.90 Patentblatt 90/41**

(84) Benannte Vertragsstaaten:
**AT BE CH DE DK ES FR GB GR IT LI LU NL SE**

(71) Anmelder: **BÖHLER AKTIENGESELLSCHAFT**
**Hansaallee 321**
**D-4000 Düsseldorf 11(DE)**

(72) Erfinder: **Hochbein, Helmut, Dipl.-Ing.**
**Henkelstrasse 20**
**D-3500 Kassel(DE)**
Erfinder: **Rau, Thomas, Dr.-Ing.**
**Buttenstrasse 11**
**D-3521 Liebenau-Niedermeister(DE)**
Erfinder: **Puck, Alfred, Prof., Dr.**
**Am Ahlberg 33**
**D-3524 Immenhausen-Mariendorf(DE)**
Erfinder: **Schreiber, Wolfgang, Dr., Ing.**
**Im Tannegrund 4**
**D-3170 Gifhorn(DE)**

(54) **Stabilisatoranordnung für Fahrzeuge und Herstellungsverfahren.**

(57) Die Erfindung bezieht sich auf eine Stabilisatoranordnung für Fahrzeuge, umfassend ein an jedem seiner Enden mit einem Arm versehenes Torsionselement, wobei ein als Faserverbundrohr aus mehreren Lagen (1ʹ) mit Harzen benetzten, aufgewickelten Faserbündeln ausgebildetes Torsionsrohr (1), insbesondere in seinen Endbereichen, durch zumindest eine zusätzlich aufgewickelte Lage (1ʺ) und /oder durch zumindest eine in diesen Bereichen mit einem vergrößerten Wickelwinkel ($\alpha$) ( d.h. geringerer Steigung) als im zwischenliegenden Arbeitsbereich gewi kelte Lage ( 1ʹ) aus Faserbündeln aus- bzw. angeformte Verstärkungen (2) als Befestigungs-bzw. Ansatzstellen für die aus, insbesondere gegossenem oder umgeformtem Metall, bestehenden Arme (3) aufweist und im Arbeitsbereich des Torsionsrohres (1) eine Umhüllungsschicht (8) aus gewebeverstärktem (Weich)Kunststoff aufgebracht ist. Bei einem erfindungsgemäßen Verfahren zur Herstellung von Stabilisatoranordnungen für Fahrzeuge können auf einen verlorenen Kern, der gebogene und/oder abgebogene Arme aufweisen kann, Faserbündel mit Harzen gewickelt, in Form gebracht bzw. formjustiert und daraufhin ausgehärtet werden.

Fig. 3

EP 0 391 222 A1

Die Erfindung betrifft eine Stabilisatoranordnung für Fahrzeuge, umfassend ein an jedem seiner Enden mit einem gegebenenfalls ein Lager für das Fahrzeugchassis tragenden Arm versehenes Torsionselement.

Ziel der Erfindung ist die Erstellung einer Stabilisatoranorndung, die extremen mechanischen Beanspruchungen stanhält, ein ausreichend geklärtes Alterungs-und Bruchverhalten hat, eine gute Materialausnutzung bei ihrer Herstellung ermöglicht und beste mechanische Eigenschaften besitzt. Diese Ziele werden bei einer Stabilisatoranordnung der eingangs genannten Art erfindungsgemäß dadurch erreicht, daß ein als Faserverbundrohr aus in mehreren Lagen mit Harzen benetzten, gewickelten Faserbündeln, insbesondere Glasfaserbündeln mit Epoxidharzen, ausgebildetes Torsionsrohr, insbesondere in seinen Endbereichen, durch zumindest eine zusätzlich aufgewickelte Lage und/oder durch zumindest eine in diesen Bereichen mit einem vergrößerten Wickelwinkel ( d.h. mit geringerer Steigung ) als im zwischenliegenden Arbeitsbereich gewickelte Lage aus Faserbündeln aus- bzw. angeformte Verstärkungen als Befestigung- bzw. Ansatzstellen für die Arme aufweist.

Eine gute Materialausnützung bzw. geringer Materialeinsatz wird durch eine im wesentlichen konstante spezifische Schubspannungsverteilung über den Wandquerschnitt des Torsionsrohres bzw. einen abnehmenden Schubmodul nach außen erreicht. Die erfindungsgemäße Stabilisatoranordnung ist hoch beanspruchbar, jedoch ausgesprochen leichtgewichtig. Weiterhin wird es durch diese Anordnung der Glasfasern ermöglicht, den Rohrkörper auch den auftretenden Biegebeanspruchungen optimal anzupassen, so daß die Biegespannungen über große Bereiche des Rohres konstant gehalten sind. Derartige Rohre sind ferner unter extremen Klimabedingungen einsetzbar und mechanische Schäden sind gut erkennbar und beeinflussen das mechanische Verhalten der Anordnung nur geringfügig und sukzessive.

Üblicherweise wird bei der Herstellung einer derartigen Stabilisatoranordnung derart vorgegangen, daß man (Glas)Fasern bzw. Filamente mit Durchmessern von etwa 10 bis 20μm, vorzugsweise 14 bis 17 μm, einsetzt. Diese Fasern sind zu Bündeln zu je 1500 bis 4000 , vorzugsweise 2000 bis 3000, Einzelfasern zusammengesetzt, wodurch sich Bündel von etwa 0,4 bis 0,6 mm², vorzugsweise etwa 0,5 mm², ergeben. Diese Faserbündel werden sodann auf Wickelmaschinen zu faserverstärkten Kunststoffrohren gewickelt, wobei beim Wickeln der Faserbündel auf einem Dorn bzw. Kern Epoxidharze oder andere geeignete Harze zugesetzt werden. Es wird bemerkt, daß als Fasern Glasfasern, Carbonfasern, Aramidfasern od. dgl. allein oder vermischt eingesetzt werden können.

Bei der Herstellung werden diese Faserbündel unter einem bestimmten Wickelwinkel zur Längsrichtung des Dorns aufgewickelt; die Wahl dieses Wickelwinkels bestimmt wiederum die Festigkeitseigenschaften des gewickelten Rohres.

Vorteilhafterweise ist vorgesehen, daß zwischen den oder außerhalb der Verstärkungen zur Ausbildung von weiteren Lagerstellen, z.B. für das Fahrzeugchassis, weitere Verstärkungen vorgesehen sind, die durch zumindest eine zusätzlich aufgewickelte Lage und/oder zumindest eine in dem vorgesehenen Bereich mit einem vergrößerten Wickelwinkel (d.h. geringerer Steigung) als im Arbeitsbereich gewickelte Lage aus Faserbündeln ausgebildet sind. Auf diese Weise kann man Bereiche des Torsionsrohres verstärken und für bestimmte Anwendungszwecke verstärkt ausbilden. Es ist somit möglich, durch das Aufbringen von zusätzlichen Lagen und/oder Veränderungen des Wickelwinkels (Vergrößerung) Verstärkungen auszubilden; bei Vergrößerung des Wickelwinkels werden mehr Glasfaserbündel pro cm Rohrlänge aufgebracht. Veränderungen des Wickelwinkels bestimmen jedoch auch die mechanischen Eigenschaften des gewickelten Torsionsrohres. Durch entsprechende Steuerung des Wickelwinkels können somit der Schubspannungsverlauf bzw. das Biegeverhalten des Torsionsrohres beeinflußt werden.

Bei einer bevorzugten Ausführungsform der Erfindung ist vorgesehen, daß die rohrinnerste Lage bzw. die rohrinnen gelegenen Lagen zumindest im Arbeitsbereich des Torsionsrohres, gegebenenfalls auch in dessen Endbereichen, mit einem Wickelwinkel von 40° bis 60°, vorzugsweise 40° bis 50°, insbesondere etwa 45°, gewickelt sind, welcher Wickelwinkel je weiterer aufgebrachter lager oder je Anzahl weiterer aufgebrachter Lagen vorzugsweise jeweils um einen Betrag verringert ist, wobei in der äußersten gewickelten Lage der Wickelwinkel 24° bis 35°, vorzugsweise 26° bis 32°, insbesondere etwa 27° bis 29° beträgt. Es kann sich jedoch auch als zweckmäßig erweisen, wenn die rohrinnerste (rohrinneren) Lage(n) ,insbesondere in den Rohrendbereichen, mit einem Wickelwinkel von 65° bis 85°, vorzugsweise 75° bis 85°, insbesondere mit etwa 80°, gewickelt sind, welcher Wickelwinkel je weiterer oder je einer Anzahl weiterer Lage(n), vorzugsweise gleichmäßig gestuft, verringert ist, wobei in der äußersten gewickelten Lage der Wickelwinkel 45° bis 60° vorzugsweise 48° bis 55°, insbesondere etwa 50°, beträgt. Durch Einhaltung dieser Wickelwinkel kann ein nahezu konstanter spezifischer Schubspannungsverlauf über den Wandquerschnitt im Arbeitsbereich des Torsionsrohres bei gleichzeitiger Ausbildung der Verstärkungen zur Aufnahme von Armen , Lagern od. dgl. ausgebildet werden.

Zweckmäßig kann es auch sein, wenn auf die vorzugsweise mit nach außen zu abnehmenden Wickelwinkel gewickelten Lagen insbesondere im Rohrendbereich zur Ausbildung von Verstärkungen weitere Lagen aus Faserbündeln mit Harzen aufgewickelt werden.

Um durch unmittelbar aufeinanderfolgende , mit verschiedenem Wickelwinkel in entgegengesetzte Richtungen gewickelte Lagen keine unerwünschten Einflüsse auf das Festigkeitsverhalten des Arbeitsbereiches zu erhalten, ist erfindungsgemäß vorgesehen, daß jede Lage von zwei mit jeweils entgegengesetztem Wickelwinkel, d.h. in entgegengesetzter Richtung bezüglich der Kern-bzw. Rohrachse, gewickelten Wickelschichten gebildet ist. Dabei ist vorgesehen, daß die Dicke jeder Lage etwa 0,4 bis 0,7 mm, vorzugsweise etwa 0,5 mm, beträgt.

Eine spezielle Ausführungs form einer erfindungsgemäßen Stabilisatoranordnung sieht vor, daß bei einem aus 16 bis 22 Lagen gewickelten Torsionsrohr in den Endbereichen des Torsionsrohres 6 bis 8 innere Lagen mit einem Wickelwinkel von etwa 80°, 5 bis 7 weitere Lagen mit einem Wickelwinkel von etwa 65° und 5 bis 7 äußere Lagen mit einem Wickelwinkel von etwa 50° gewickelt sind, wobei die jeweiligen Wickelwinkel dieser Lagen im Arbeitsbereich etwa 45° bzw. 36° bzw. 28° betragen.

Um Spannungsspitzen in der hergestellten Stabilisatoranordnung zu vermeiden, ist es zweckmäßig, wenn vorgesehen ist, daß der Übergangsbereich von Arbeitsbereich zu den Verstärkungen gleichmäßig gestuft bzw. gerundet ausgebildet ist, indem der Beginn der Lagen mit vergrößertem Wickelwinkel bzw. der Beginn zusätzlicher Lagen je Lage in Richtung auf die Rohrenden , insbesondere gleichmäßig, versetzt ist.

Zur Vermeidung von mechanischen Beschädigungen im Gebrauch bzw. zur Ausbildung einer ansehnlichen Oberfläche ist vorgesehen, daß auf den Arbeitsbereich, vorzugsweise auch auf den Übergangsbereich des Torsionsrohres, eine Umhüllungsschicht aus gegebenenfalls gewebeverstärktem (Weich)Kunststoff, vorzugsweise aus mit Epoxidharz getränktem Polyamidgewebe, aufgebracht ist, wobei die für die Lager vorgesehenen Verstärkungsstellen für die Arme freigelassen sind.

Auf die erfindungsgemäß ausgebildeten Verstärkungen können die aus gegossenem oder umgeformtem Metall, z.B. Stahl, Guß, Leichtmetall od. dgl. bestehenden Arme mit vorzugsweise innengezahnten Verbindungsbuchsen aufgesetzt und /oder verklebt werden. Durch die Kombination von Innenverzahnung und Verstärkung ergibt sich eine feste Verbindung, die sich durch die Gegebenheiten im Gebrauch nahezu nicht verändert. Zur Unterstützung dieser Verbindung kann vorgesehen sein, daß in das Innere der Enden der Torsionsrohre ein Verstärkungs- bzw. Lagerstift eingeführt ist, der gegebenenfalls mit der Verbindungsbuchse verbunden ist oder ein Lager für das Fahrzeugchassis trägt. Da- mit ergibt sich eine praxisgerechte Ausführung der erfindungsgemäßen Stabilisatoranordnung.

Es ist auch möglich, das Torsionsrohr und die Arme einstückig durch entsprechendes Wickeln auszubilden, wozu vorgesehen ist, daß an die Endbereiche des Torsionsrohres die Arme als gewikkeltes Massiv-oder Rohrstück ausgebildet einstükkig angewickelt sind, wobei im Ansatzbereich jedes Armes zumindest eine, vorzugsweise eine Anzahl, zusätzliche(r) Lage(n) aus mit Harz benetzten Faserbündeln zur Ausbildung eines Übergangsbereiches bzw. zur Verstärkung des Ansatzbereiches auf- bzw. umgewickelt ist. Dieser zusätzlich aufgewickelte Übergangsbereich bzw. Ansatzbereich verbindet den Arm und das Torsionsrohr zu einer biegesteifen bzw. ausreichende Festigkeit besitzenden Einheit. Dabei kann vorgesehen sein, daß das Torsionsrohr gemeinsam mit den in Bezug auf den Arbeitsbereich abgebogen verlaufenden Armen einstückig um einen, insbesondere verlorenen, Kern, vorzugsweise auf Hartschaumstoff, Papier od. dgl., gewickelt ist. Der im Torsionsrohr bzw. in den Armen enthaltene verlorene Kern beeinflußt dabei auf Grund seiner geringen Festigkeit die Funktion der Stabilisatoranordnung kaum.

Ein erfindungsgemäßes Verfahren zur Herstellung von Stabilisatoranordnungen für Fahrzeuge, z.B. PKW od. LKW od. dgl., welche Stabilisatoranordnungen ein an jedem seiner Enden mit einem Arm versehenes Torsionsrohr umfassen, ist erfindungsgemäß dadurch gekennzeichnet , daß auf einen wiederverwendbaren Dorn, z.B. aus Metall oder einen verlorenen Kern , z.B. aus Hartschaumstoff, Papier od. dgl., Faserbünden mit Harzen, insbesondere Glasfaserbündel mit Epoxidharzen, in mehreren Lagen gewickelt werden, wobei der Wickelwinkel von der innersten Lage zu der äußersten Lage hin je Lage oder je einer gegebenen Anzahl von Lagen verkleinert wird. Dabei ist erfindungsgemäß vorgesehen, daß zur Ausbildung von Verstärkungen in dem Torsionsrohr, z.B. für Verbindungsbuchsen, Armlager, Chassislager od. dgl., der Wickelwinkel der über das Torsionsrohr durchgehend gewickelten Lagen in dem vorgesehenen Verstärkungsbereich vergrößert wird und/oder zusätzliche Lagen in diesem Bereich aufgewickelt werden, wobei vorzugsweise deren Wickelwinkel von der innersten Lage zu der äußersten Lage hin je Lage oder je einer gegebenen Anzahl von Lagen verkleinert wird. Zweckmäßig ist es hiebei, daß der Arbeitsbereich des Torsionsrohres mit den Armen in einem Arbeitsgang gewickelt wird und die Arme nach Beendigung des Wickelvorganges in Form gebracht bzw. formustiert und daraufhin ausgehärtet werden.

Bevorzugte Ausführungsformen der Erfindung sind der folgenden Beschreibung, den Patentansprüchen und der Zeichnung zu entnehmen.

Im folgenden wird die Erfindung anhand von Ausführungsbeispielen in der Zeichnung näher erläutert. Es zeigen Fig. 1 eine schematische Ansicht einer Stabilisatoranordnung, Fig. 1a und 1b verschiedene Beispiele für die Aufbringung der Wikkellagen, Fig. 2 und 3 verschiedene Verbindungen zwischen einem Arm und einem Torsionsrohr, Fig. 4 eine schematische Ansicht einer anderen erfindungsgemäßen Stabilisatoranordnung, Fig. 5 und 6 erfindungsgemäß Verbindungen zwichen einem Arm und einem Torsionsrohr, Fig. 7 eine weitere Ausführungsform einer Stabilisatoranordnung und Fig. 8 eine Detailansicht einer Verstärkung im Torsionsrohr.

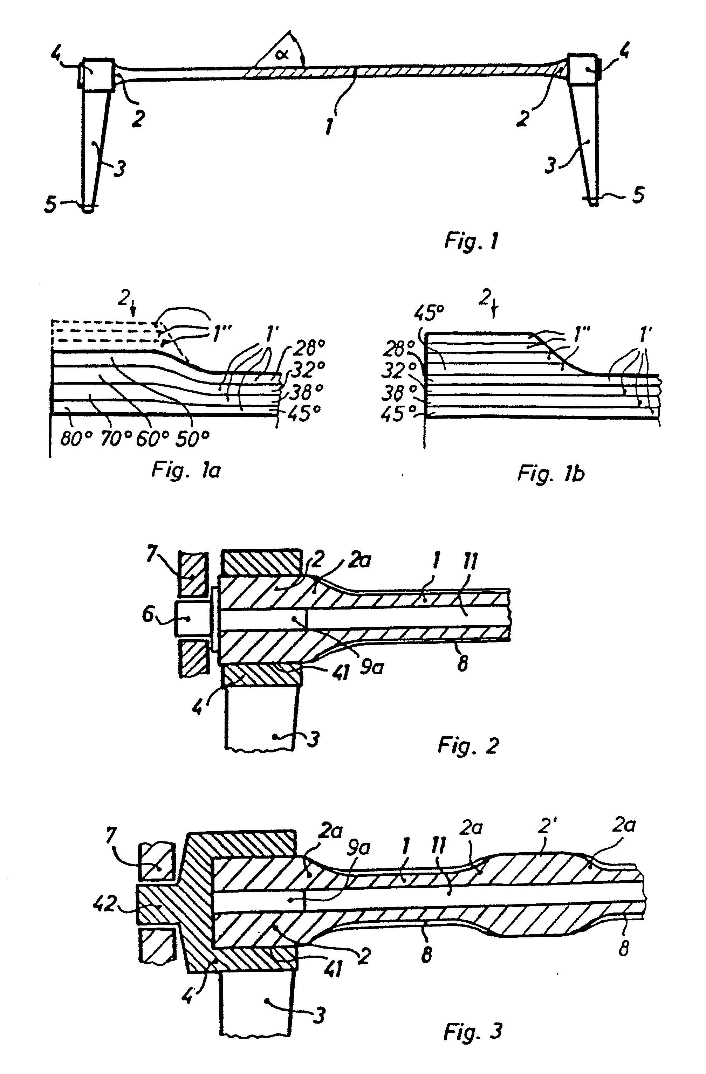

Fig. 1 zeigt eine Stabilisatoranordnung mit einem Torsionsrohr 1, das aus faserverstärktem Kunststoff hergestellt ist. An beiden Enden des Torsionsrohres 1 sind Verstärkungen 2 ausgebildet, auf die Verbindungsbuchsen 4 von Armen 3 aufgesteckt sind, welche Arme 3 mit ihren Enden 5 an einem Fahrzeugteil befestigt sind. Das Torsionsrohr 1 besteht aus mit Kunstharzen benetzten, gewickelten Fasern, wobei die Fasern zu Bündeln zusammengefaßt sind, die mit einem bestimmten Wickelwinkel $\alpha$ auf einen Kern aufgewickelt werden und auf diesem erhärten gelassen werden. Die Faserbündel werden in mehreren Lagen längs des Rohres gewickelt, wobei im Verlauf jeder Lage und/oder verschiedene aufeinanderfolgende Lagen oder aufeinanderfolgende Anzahlen von Lagen verschiedene Wickelwinkel besitzen können.

Zur Ausbildung gewünschter mechanischer Eigenschaften ist es nun möglich ( Fig. 1a, 1b), die längs des Torsionsrohres bzw. die in dessen End- bzw. Arbeitsbereich gewickelten Wickellagen 1' derart auszubilden, daß die innenliegenden Wickellagen größere Wickelwinkel aufweisen als die weiter außen aufgewickelten Wickellagen. Auf diese Wickellagen 1' können zur Ausbildung oder Verstärkung 2 noch weitere Wickellagen 1'' aufgewickelt werden. Es ist alternativ oder zusätzlich möglich, in den Endbereichen des Torsionsrohres oder an den Stellen, an denen Verstärkungen 2 ausgebildet werden sollen, den Wickelwinkel der Wickellagen 1' örtlich zu vergrößern,um dadurch eine Verdickung der ausgebildeten Lage zu erreichen ( Fig. 1a). Gleichzeitig nimmt jedoch, wie in Fig. 1a links gezeigt, der Wickelwinkel dieser Bereiche , die durch Vergrößerung der Steigung des Wickelwinkels dicker ausgebildet werden, mit den einzelnen Lagen nach außen hin ab. Wie in Fig. 1a gezeigt, kann auf die bereits durch Vergrößerung des Wickelwinkels der einzelnen Lagen ausgebildete Verstärkung 2 zusätzlich noch eine Anzahl von weiteren Wickellagen 1'' aufgebracht werden, die gegebenenfalls, einen von innen nach außen hin abneh menden Wickelwinkel besitzen. Die Abnahme des Wickelwinkels von innen nach außen ergibt gute Schubspannungseigenschaften; die Zunahme des Wickelwinkels im Längsverlauf einer Lage ermöglicht die Ausbildung verschiedener Rohrdicken.

In Fig. 1b sind auf die durchgehend im Verlauf des Torsionsrohres 1 ausgebildeten Wickellagen 1', welche nach außen zu mit abnehmendem Wikkelwinkel gewickelt sind, noch über ihre Länge ebenfalls mit gleichbleibender Dicke gewickelte Wickellagen 1'' aufgebracht. Durch diese Ausbildung von Verstärkungen kann das Torsionrohr 1 fest mit metallischen Armen,Lagern od. dgl. verbunden werden.

Fig. 2 zeigt die Verbindung zwischen einem Torsionsrohr 1 und einem Arm 3.Der Arm 3 ist mit einer Verbindungsbuchse 4 mit einer Innenverzahnung 41 auf das verdickte Ende 2 des Torsionsrohres 1 aufgeschoben.Die Verbindungsbuchse 4 kann auch durch Pressung und/oder Klebung mit dem verdickten Teil 2 des Torsionsrohres 1 formschlüssig verbunden sein. In den Hohlraum 11 des Torsionsrohres 1 ist ein Bolzen 9a eingesetzt, der an seinem freien Ende ein Lager 6 für das Fahrzeugchassis 7 trägt. Beachtenswert ist bei dieser Ausführungsform, daß auf das Torsionsrohr 1 eine Überzugsschicht 8 aufgebracht ist, die vorteilhafterweise aus einem (Weich)Kunststoff oder aus mit gewebeverstärktem (Weich)Kunstharz, z.B. mit polyamidgewebeverstärktem Epoxidharz gebildet ist. Diese Überzugsschicht 8 erstreckt sich vorteilhafterweise auch über den Übergangsbereich 2a vom Arbeitsbereich des Torsionsrohres 1 zu der Verstärkung 2, und zwar bis zur Verbindungsbuchse 4 des Armes 3.

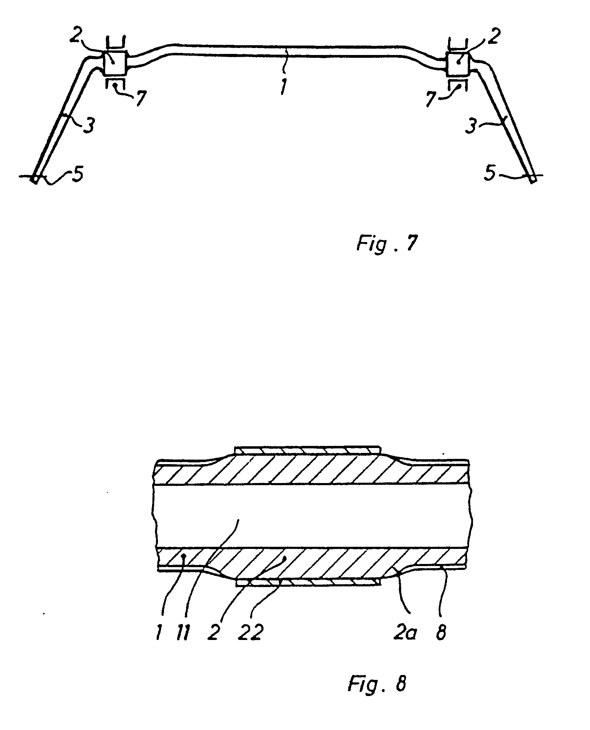

In Fig. 3 ist eine andere Befestigungsart des Armes 3 dargestellt. Der Arm 3 trägt einen Lagerzapfen 42, der sich am Fahrzeugchassis 7 abstützt. Ein Lagerbolzen 9a, der gegebenenfalls mit der Verbindungsbuchse 4 einstückig verbunden sein kann, dient dazu, daß ein Zusammendrücken der Verstärkung 2a durch das unter Kraftschluß aufgesetzte Lager 4 verhindert wird. Man erkennt ferner, daß im Abstand von der Verstärkung 2 eine weitere Verstärkung 2' im Verlauf des Torsionsrohres 1 durch zusätzlich aufgewickelte Wickellagen oder durch Wickellagen mit vergrößertem Wickelwinkel ausgebildet ist. Diese Verstärkung kann z.B. wie in Fig. 8 dargestellt, zur Aufnahme eines weiteren Lagers, z.B. eines Chassislagers, ausgebildet sein. Wie in Fig. 8 kann die Verstärkung 2' mit einer Hülse 22 , insbesondere aus Metall , umgeben sein,um Druckkräfte besser aufnehmen zu können. Wickelwinkel ausgebildet ist. Diese Verstärkung kann z.B. wie in Fig. 8 dargestellt, zur Aufnahme eines weiteren Lagers, z.B. eines Chassislagers, ausgebildet sein. Wie in Fig. 8 , kann die Verstärkung 2′ mit einer Hülse 22, insbesondere aus Metall, umgeben sein, um Druckkräfte besser aufnehmen zu können.

Die Übergänge 2a zwischen den Verstärkungen 2 bzw. 2′ und dem Torsionsrohr 1 sind vorteilhafterweise gerundet bzw. fließend ausgebildet, um Spannungspitzen zu vermeiden. Dazu wird der Wickelwinkel allmählich verändert bzw. werden zusätzlich aufgebrachte Schichten mit ihren Enden stufen- bzw.treppenförmig abgesetzt aufeinanderfolgend aufgebracht.

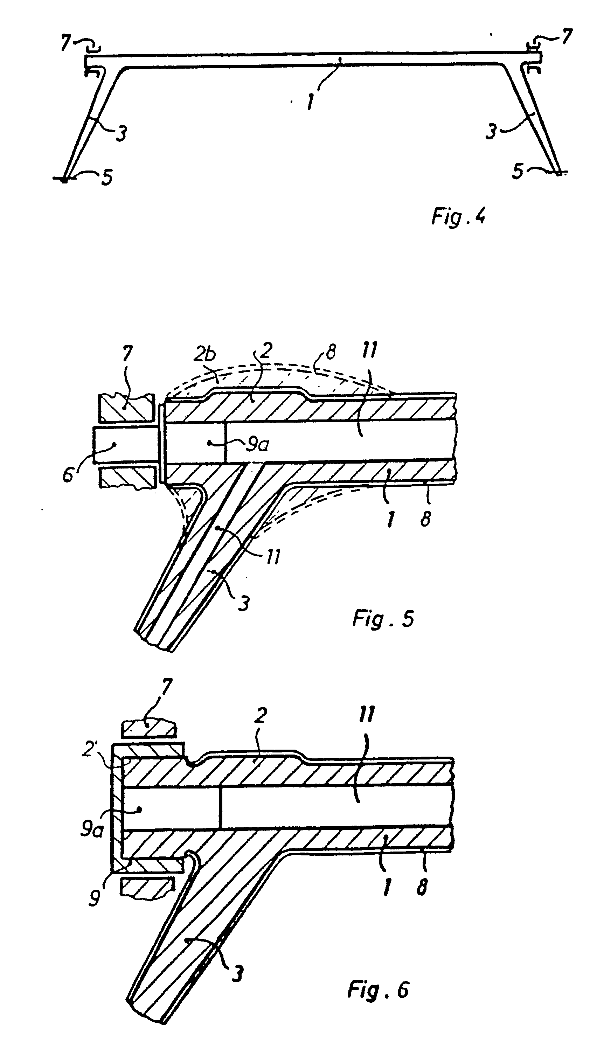

Fig. 4 zeigt eine Ausführungsform einer Stabilisatoranordnung, bei der die Arme 3 und das Torsionsrohr 1 einstückig ausgebildet sind, wobei an den Enden des Torsionsrohres 1 Verstärkungen 2′ zur Aufnahme der Lager 7 für das Fahrzeugchassis ausgebildet sein können. Die einstückige Ausbildung des Torsionsrohres 1 mit dem Arm 3 kann z.B. , wie in Fig. 5 dargestellt ist, derart erfolgen, daß das Torsionsrohr 1 und der Arm 3 jeweils über Kerne gewickelt sind. Der einstückige Ansatz des Armes 3 am Torsionsrohr 1 kann durch entsprechende Wickeltechnik ausgebildet werden. Anstelle der ausgezogen dargestellten Verstärkung 2, welche vorgesehen ist, um dem Arm 3 eine bessere Verbindung zu geben, kann eine aufwendigere Verstärkung 2b aus Wickellagen ausgebildet werden, wie sie strichliert eingezeichnet ist. Die Überzugsschicht 8 wird in diesem Fall über den Ansatzbereich 2b und auch über dem Arm 3 ausgebildet, welcher ebenfalls aus demselben faserverstärkten Kunststoff ausgebildet ist, sodaß alle Oberflächen von der Überzugsschicht 8 ausreichend in Gebrauch geschützt werden.

In Fig. 6 ist eine Ausbildung des Armes 3 als Massivteil dargestellt.

In Fig. 6 ist auf die Verstärkung 2′ an den äußeren Enden des Torsionsrohres 1 ein Lager 9 mit einem Lagerbolzen 9a aufgesetzt, welches sich auf das Lager 7 für das Fahrzeugchassis abstützt.

In Fig. 7 ist eine Ausführungsform einer Stabilisatoranordnung dargestellt, die derart hergestellt wurde, daß das Torsionsrohr 1 gemeinsam mit den Armen 3 über einen langgestreckten verlorenen Kern gewickelt wurde. In noch nicht ausgehärtetem Zustand wurden die Arme 3 vom Torsionsrohr 1 formjustiert bzw. die Kröpfungen ausgebildet, welche die Verstärkungen 2′ beidseitig begrenzen. Die Enden 5 der Arme 3 können in diesem Fall mit Ösen bzw. Ausnehmungen zur Aufnahme von Befestigungszapfen ausgebildet werden oder werden in Ansatzhülsen eingeschoben, welche mit Fahrzeugteilen verbindbar sind. Die Bauweise der Stabilisatoranordnung nach Fig. 7 bzw. Fig. 8 mit einem verlorenen Kern eignet sich besonders vorteilhaft für PKW-Stabilisatoranordnungen.

Durch den erfindungsgemäßen Aufbau der Stabilisatoranordnungen bzw. durch die Ausbildung der Verstärkungen erhält man örtlich vergrößerte Wandstärken im Torsionsrohr, wobei die spezifischen Schubspannungen über den Rohrwandquerschnitt zwar nicht völlig konstant sind, jedoch in der Außenzone hohe Torsionsfestigkeit vorhanden ist und Biegebeanspruchungen gut vertragen werden.

Die als Oberflächenschutz für das GFK-Torsionsrohr dienende Überzugsschicht 8 mildert bzw. vermeidet vor allem die Auswirkungen von äußerlich einwirkenden Beschädigungen , z.B. Steinschlag, und verhindert das Eindringen von Feuchtigkeit.

Bei der einteiligen Ausbildung der Stabilisatoranordnung gemäß Fig. 4 und Fig. 7 erhält man den Vorteil, daß auch die Arme 3 als federnde Elemente vorhanden sind.

Die Stabilisatoranordnung, bei der ein GFK-Torsionsrohr mit Armen aus anderem Material, z.B. Metall ,verbunden wird, ist einfach herstellbar,da jeder Bauteil für sich sehr kostengünstig und einfach gefertigt werden kann. Der Montagevorgang wird dabei auf ein Befestigen bzw. Einpressen und/oder Einkleben des Torsionsrohres 1 in die Verbindungsbuchse 4 des Armes 3 reduziert. Das Torsionsrohr zwigt ferner als aktives Federelement ein gutmütiges Versagensverhalten im Gegensatz zu den metallischen, bisher eingesetzten Federelementen bzw. metallischen Torsionsstäben. Auch bei langes Einsatz schreitet eine Beschädigung nur langsam voran und ist vor allen Dingen an einem aus faserverstärkten Kunststoff hergestellten Torsionsrohr eindeutig erkennbar.

## Ansprüche

1. Stabilisatoranordnung für Fahrzeuge, umfassend ein an jedem seiner Enden mit einem gegebenenfalls ein Lager für das Fahrzeugchassis tragenden Arm versehenes Torsionselement, dadurch gekennzeichnet, daß ein als Faserverbundrohr aus in mehreren Lagen (1′) mit Harzen benetzten, gewickelten Faserbündeln, insbesondere Glasfaserbündeln mit Epoxidharzen, ausgebildetes Torsionsrohr (1), insbesondere in seinen Endbereichen, durch zumindest eine zusätzlich aufgewickelte Lage (1′) und/oder durch zumindest eine in diesen Bereichen mit einem vergrößerten Wickelwinkel ($\alpha$) ( d.h. geringerer Steigung) als im zwischenliegenden Arbeitsbereich gewickelte Lage ( 1′) aus Faserbündeln aus- bzw. angeformte Verstärkungen (2) als Befestigungs- bzw. Ansatzstellen für die Arme (3) aufweist.

2. Anordnung nach Anspruch 1, dadurch gekennzeichnet, daß zwischen den oder außerhalb der Verstärkungen (2) zur Ausbildung von weiteren Lagerstellen, z.B. für das Fahrzeugchassis, weitere Verstärkungen (2') vorgesehen sind, die durch zumindest eine zusätzlich aufgewickelte Lage (1'') und/oder durch zumindest eine in dem vorgesehenen Bereich mit einem vergrößerten Wickelwinkel (α) ( d.h. geringerer Steigung) als im Arbeitsbereich gewickelte Lage (1') aus Faserbündeln ausgebildet sind.

3. Anordnung nach Anspruch 1 oder 2, dadurch gekennzeichnet, daß die rohrinnerste Lage bzw. die rohrinnen gelegenen Lagen zumindest im Arbeitsbereich des Torsionsrohres (1) gegebenenfalls auch in dessen Endbereichen, mit einem Wickelwinkel von 40° bis 60°, vor zugsweise 40° bis 50°, insbesondere etwa 45°, gewickelt sind, welcher Wickelwinkel je weiterer aufgebrachter Lage oder je Anzahl weiterer aufgebrachter Lagen vorzugsweise jeweils um einen Betrag verringert ist, wobei in der äußersten gewickelten Lage der Wickelwinkel 24° bis 35°, vorzugsweise 26° bis 32°, insbesondere etwa 27° bis 29°, beträgt.

4. Anordnung nach einem der Ansprüche 1 bis 3, dadurch gekennzeichnet, daß die rohrinnerste (rohrinneren) Lage(n), insbesondere in den Rohrendbereichen, mit einem Wickelwinkel (α) von 65° bis 85°, vorzugsweise 75° bis 85°, insbesondere mit etwa 80°, gewickelt sind, welcher Wickelwinkel (α) je weiterer oder je einer Anzahl weiterer Lage(n), vorzugsweise gleichmäßig gestuft, verringert ist, wobei in der äußersten gewickelten Lage der Wickelwinkel 45° bis 60°, vorzugsweise 48° bis 55°, insbesondere etwa 50°, beträgt.

5. Anordnung nach Anspruch 3 oder 4, dadurch gekennzeichnet, daß auf die vorzugsweise mit nach außen zu abnehmendem Wickelwinkel gewickelten lagen (1'), insbesondere im Rohrendbereich, zur Ausbildung von Verstärkungen weitere Lagen (1'') aus faserbündeln mit Harzen aufgewickelt werden.

6. Anordnung nach einem der Ansprüche 1 bis 5, dadurch gekennzeichnet, daß jede Lage ( 1', 1'') von zwei mit jeweils entgegengesetztem Wickelwinkel (α), d.h. in entgegengesetzter Richtung bezüglich der Kern-bzw. Rohrachse , gewickelten Wickelschichten gebildet ist.

7. Anordnung nach einem der Ansprüche 1 bis 6, dadurch gekennzeichnet, daß die Dicke jeder Lage etwa 0,4 bis 0,7 mm, vorzugsweise etwa 0,5 mm, beträgt.

8. Anordnung nach einem der Ansprüche 1 bis 7, dadurch gekenn zeichnet, daß bei einem aus 16 bis 22 Lagen gewickelten Torsionsrohr (1) in den Endbereichen des Torsionsrohres (1) 6 bis 8 innere Lagen mit einem Wickelwinkel von etwa 80°, 5 bis 7 weitere Lagen mit einem Wickelwinkel von etwa 65° und 5 bis 7 äußere Lagen mit einem Wickelwinkel von etwa 50° gewickelt sind, wobei die jeweiligen Wickelwinkel dieser Lagen (1') im Arbeitsbereich etwa 45° bzw. 36° bzw. 28° betragen.

9. Anordnung nach einem der Ansprüche 1 bis 8, dadurch gekennzeichnet, daß der Übergangsbereich vom Arbeitsbereich zu den Verstärkungen (2) gleichmäßig gestuft bzw. gerundet ausgebildet ist, indem der Beginn der Lagen mit vergrößertem Wickelwinkel (α) bzw. der Beginn zusätzlicher Lagen je Lage in Richtung auf die Rohrenden, insbesondere gleichmäßig, versetzt ist.

1o. Anordnung nach einem der Ansprüche 1 bis 9, dadurch gekennzeichnet ,daß auf den Arbeitsbereich, vorzugsweise auch auf den Übergangsbereich des Torsionsrohres (1), eine Umhüllungsschicht (8) aus gegebenenfalls gewebeverstärktem (Weicht)Kunststoff, vorzugsweise aus mit Epoxidharz getränktem Polyamidgewebe, aufgebracht ist, wobei die für die Lager vorgesehenen Verstärkungsstellen (2') bzw. Verstärkungsstellen (2) für die Arme (3) freigelassen sind.

11. Anordnung nach einem der Ansprüche 1 bis 10, dadurch gekennzeichnet, daß die aus gegossenem oder umgeformtem Metall, z.B. Stahl , Guß, Leichtmetall od. dgl. bestehenden Arme ( 3) mit vorzugsweise innengezahnten Verbindungsbuchsen ( 4 ) auf die als Befestigungsstellen dienenden Verstärkungen (2) aufgesetzt und /oder mit diesen verklebt sind.

12. Anordnung nach einem der Ansprüche 1 bis 11, dadurch gekennzeichnet, daß in das Innere der Enden der Torsionsrohre (1) ein Verstärkungs- bzw. Lagerbolzen (9a) eingeführt ist, der gegebenenfalls mit der Verbindungsbuchse (4) oder Lagerbuchse (9) ver bunden ist oder ein Lager (6) für das Fahrzeugchassis (7) trägt.

13. Anordnung nach einem der Ansprüche 1 bis 12, dadurch gekennzeichnet, daß an die Endbereiche des Torsionsrohres (1) die Arme (3) als gewickeltes Massiv-oder Rohrstück ausgebildet einstückig angewickelt sind, wobei im Ansatzbereich jedes Armes (3) zumindest eine, vorzugsweise eine Anzahl, zusätzliche(r) Lage(n) (2b) aus mit Harz benetzten Faserbündeln zur Ausbildung eines Übergangsbereiches bzw. zur Verstärkung des Ansatzbereiches auf-bzw. umgewickelt ist.

14. Anordnung nach einem der Ansprüche 1 bis 13, dadurch gekennzeichnet, daß das Torsionsrohr (1) gemeinsam mit den in Bezug auf den Arbeitsbereich abgebogen verlaufenden Armen (3) einstückig um einen, insbesondere verlorenen, Kern vorzugsweise aus Hartschaumstoff, Papier od. dgl., gewickelt ist.

15. Anordnung nach einem der Ansprüche 1 bis 14, dadurch gekennzeichnet, daß die Verstärkungen zur Abstützung für Lager des Fahrzeugchassis (7) mit Metallhülsen (22) umgeben sind.

16.Verfahren zur Herstellung von Stabilisatoranordnungen für Fahrzeuge, z.B. PKW, LKW od. dgl.,

welche Stabilisatoranordnungen ein an jedem seiner Enden mit einem Arm versehenes Torsionsrohr insbesondere nach einem der Ansprüche 1 bis 15 umfassen, dadurch gekennzeichnet, daß auf einen wiederverwendbaren Dorn, z.B. aus Metall, oder einen verlorenen Kern, z.B. aus Hartschaumstoff, Papier od. dgl. , Faserbündel mit Harzen, insbesondere Glasfaserbündel mit Epoxidharzen, in mehreren Lagen gewickelt werden, wobei der Wickelwinkel von der innersten Lage zu der äußersten Lage hin je Lage oder je einer gegebenen Anzahl von Lagen verkleinert wird.

17. Verfahren nach Anspruch 16, dadurch gekennzeichnet, daß jede Lage aus zwei Wickelschichten ausgebildet wird, von denen jede mit entgegengesetztem Wickelwinkel, d.h. in entgegengesetzter Richtung bezüglich der Rohrachse, gewickelt wird.

18. Verfahren nach Anspruch 16 oder 17, dadurch gekennzeichnet, daß zur Ausbildung von Verstärkungen im Torsionsrohr z.B. für Verbindungsbuchsen, Armlager, Chassislager od. dgl., der Wickelwinkel der über das Torsionsrohr durchgehend gewickelten Lage in dem vorgesehenen Verstärkungsbereich vergrößert wird und/oder zusätzliche Lagen in diesem Bereich aufgewickelt werden, wobei vorzugsweise deren Wickelwinkel von der innersten Lage zu der äußersten Lage hin je Lage oder je einer gegebenen Anzahl von Lagen verkleinert wird.

19. Verfahren nach einem der Ansprüche 16 bis 18, dadurch gekennzeichnet, daß das Wickelgut bzw. der Torsionsstab nach dem Wickeln auf dem Kern in Form gebracht bzw. formjustiert und daraufhin ausgehärtet wird.

20. Verfahren nach einem der Ansprüche 16 bis 19, dadurch gekennzeichnet, daß im Übergangsbereich von einem Wickelwinkel zu einem anderen (größeren) Wickelwinkel im Verlauf einer Lage eine kontinuierliche Änderung des Wickelwinkels vorgesehen wird.

21. Verfahren nach einem der Ansprüche 16 bis 20, dadurch gekennzeichnet, daß der Arbeitsbereich des Torsionsrohres mit den Armen in einem Arbeitsgang gewickelt wird und die Arme nach Beendigung des Wickelvorganges abgebogen und der Torsionsstab mit den abgebogenen Armen ausgehärtet werden.

Fig. 1

Fig. 1a

Fig. 1b

Fig. 2

Fig. 3

Fig. 4

Fig. 5

Fig. 6

Fig . 7

Fig . 8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | GB-A-2 207 732 (LOHR & BROMKAMP) <br> * Seite 2, Zeile 30 - Seite 3, Zeile 27; Seite 6, Zeilen 4-10; Figuren 1,4 * | 1-5,11, 15 | B 60 G 21/055 <br> B 29 C 53/58 <br> B 29 L 23/00 |
| A | | 18 | |
| Y | FR-A-2 090 263 (TRW) <br> * Ansprüche 1,2,7,10; Figuren 9,10 * | 1-5,11, 15 | |
| A | FR-A-2 536 131 (HONDA et al.) <br> * Seite 6, Zeilen 25-36; Seite 7, Zeilen 20-29 * | 1,3,16, 18,19 | |
| A | GB-A-2 051 306 (CELANESE CORPORATION) <br> * Seite 3, Zeilen 34-110; Figure 3 * | 1,3,6-9 ,16-19 | |
| A | EP-A-0 009 007 (CIBA-GEIGY) <br> * Ansprüche 7-9,16,17; Figuren 1,7 * | 1,3,6, 16,17, 19 | |
| A | PATENT ABSTRACTS OF JAPAN <br> Band 10, Nr. 171 (M-489)(2227) 17. Juni 1986; & JP-A-61021433 (NIHON HATSUJIYOU K.K.) 30.01.1986 | 1,12 | **RECHERCHIERTE SACHGEBIETE (Int. Cl.5)** |
| A | US-A-4 231 555 (T. SAITO) <br> * ganzes Dokument * | 1,10,12 | B 60 G <br> B 29 C <br> B 29 D <br> F 16 C <br> F 16 F |
| A | DE-A-3 612 777 (PORSCHE) <br> * ganzes Dokument * | 1,13,14 ,16,21 | |
| A | FR-A-2 480 683 (PEUGEOT et al.) <br> * Anspruch 1; Figur 2 * | 2,15,18 | |

Der vorliegende Recherchenbericht wurde für alle Patentansprüche erstellt

| Recherchenort | Abschlußdatum der Recherche | Prüfer |
|---|---|---|
| BERLIN | 03-07-1990 | KRIEGER P O |